# EUROPEAN PATENT SPECIFICATION

(11) **EP 3 784 034 B1**
(45) Date of publication and mention of the grant of the patent: **15.11.2023**
(21) Application number: 19728526.5
(22) Date of filing: 25.04.2019
(51) Int. Cl.: A01K 63/04

(54) **WATER FILTER FOR AN AQUARIUM**
WASSERFILTER FÜR EIN AQUARIUM
FILTRE À EAU POUR UN AQUARIUM

(30) Priority: 26.04.2018 PL 42537218
(43) Date of publication of application: 03.03.2021
(73) Proprietor: Aquael Sp. z o.o., 02-849 Warszawa (PL)
(72) Inventor: JANKIEWICZ, Janusz, 02-849 Warszawa (PL); BRZESKI, Jerzy, 05-090 Raszyn (PL); KONTER, Stanislaw, 00-150 Warszawa (PL)
(74) Representative: JWP Patent & Trademark Attorneys
(86) International application number: PCT/IB2019/053417
(87) International publication number: WO 2019/207522

(56) References cited:
- EP-A1- 1 277 398
- US-A1- 2003 164 324
- US-A1- 2003 164 324

## Description

The object of the invention is a water filter for an aquarium, in particular a water filter used in external water filtration systems in aquaria for fish farming and in waterholes.

In the prior art there are known external filters for purification of water in aquaria and waterholes, where contaminated water introduced into the filter passes a sequence of levels and types of filtration and then, upon purification, it is guided back to the water reservoir communicated with the filter.

As a rule, such filters constitute separate, i.e. external, components of equipment of an aquarium, positioned close to the aquarium or waterhole with which they operate. Such filters are connected to water circulation effected in them by means of conduits which are attached to connection ports secured within the cover of the filter. These ports constitute entrance elements of water inlet and water outlet arrangements in the filter and are provided with valves. During removal of the connection ports from the cover, for example for washing, periodic inspection or servicing of the filter components, the valves housed therein have to remain in their closed position. Changes in the valve position of the status open-close and vice versa are effected most frequently by an additional activating element, for example by a lever.

Document US 2003164324 A1 discloses an external filter for water purification in an aquarium and encompassing a housing with filtration cartridges and a cover secured thereto and provided with connection ports for water conduits from and to an aquarium reservoir. Both connection ports, i.e. the inlet port and the outlet port, respectively, are connected to each other in one module and they comprise ball valves. Upon detachment of the module from the filter cover, also the valves in the ports become removed. A change in the operation mode of the inlet and outlet valves, i.e. from the opened one into the closed one and vice versa, is effected concurrently by means of an articulated joint formed with the ports in the module.

A similar solution is disclosed in the document US 2015048017 A1. Connection ports are connected to the corresponding valves and they are together secured in a body that may be removed from a cover. The operational mode of the valves is changed concurrently by means of an activating arrangement with a rotatable handle.

The presented publications lack in a solution to prevent burdensome, during the use, splashing water from the filter during detachment of the connection ports from the cover.

The aim of this invention is to propose an improved construction of an external water filter for an aquarium, where during detachment of connection ports from the cover no splashing of water from the filter occurs.

A water filter for an aquarium according to this invention and as defined in claim 1 comprises:
- a housing in a form of an open at its top container with filtration cartridges arranged therein, and
- a cover secured to the housing,
- water inlet and water outlet arrangements comprising connection ports that are removable from said cover, a priming arrangement and said removable connection ports being mounted to said cover.

The water inlet and water outlet arrangements are provided with valves. The filter is characterized in that the water inlet comprises a first valve and a second valve, while the water outlet arrangement comprises a first valve and a second valve. Each first valve comprises a body and is connected to the connection port and each second valve comprises a body and is fixed within the cover, downstream the first valve at the connection port positioned within the cover. Upon positioning of the connection port within the cover, the body of the first valve is coupled with the body of the second valve, and each second valve is fixed between the first valve at the connection port and the cover. The first valves and second valves are coupled by a gear drive transmission mechanism, which further enables changing the position of the first valves and second valves.

Preferably, first valves and second valves are rotary valves.

More preferably, first valves and second valves are ball valves.

Preferably, the drive transmission mechanism comprises a rotatable lever with a rack and a cooperating toothed wheel, where the lever with the rack is seated in a bearing in the body of the first valve and the toothed wheel is seated in a bearing in the body of the second valve.

Preferably then, the body of the first valve is surrounded by a jacket in which an opening for lever rotation is formed.

Additionally preferably, the body of the second valve has a locking plug, formed above the toothed wheel, which in the position of a connection port inserted within the cover is arranged above the envelope of the rack.

Moreover, in a preferable solution, the filter has a chamber of a roughing filter, which is formed within the cover, separately relative to the position of the water inlet and water outlet arrangements within the cover.

Preferably then, the water inlet arrangement has at least one check valve which is arranged downstream the water inlet arrangement and upstream the chamber of the roughing filter.

Preferably, it comprises two check valves constituted by a first closing flap and a second closing flap.

The proposed in this invention solution concerning a double construction of valves in the water inlet and water outlet arrangements significantly enhances the comfort of use of the filter, in particular related to absence of splashing water during detachment of connection ports. It has been also unexpectedly found out that provision of two valves in the inlet and outlet water circulation arrangement makes it possible to use an additional filtration chamber formed in the cover, i.e. above the main filtration cartridges heretofore arranged exclusively within the filter housing.

The object of the invention is shown in embodiments in the drawing, where:
fig. 1 shows a perspective view of a water filter for an aquarium according to the invention,
fig. 2 shows a partial simplified cross-sectional view of a filter illustrating water inlet and water outlet arrangements,
fig. 3 shows a perspective view of valves used in water inlet and water outlet arrangements,
fig. 4 shows a cross-sectional view of valves used in water inlet and water outlet arrangements,
figs. 5 a-b show valve arrangements, correspondingly in an operational mode (open position of the valves) and a mode with detached connection port (closed position of the valves),
fig. 6 shows a detailed cross-sectional view illustrating a water inlet arrangement and a chamber of a roughing filter, and
fig. 7 shows a detailed cross-sectional view illustrating a water outlet arrangement.

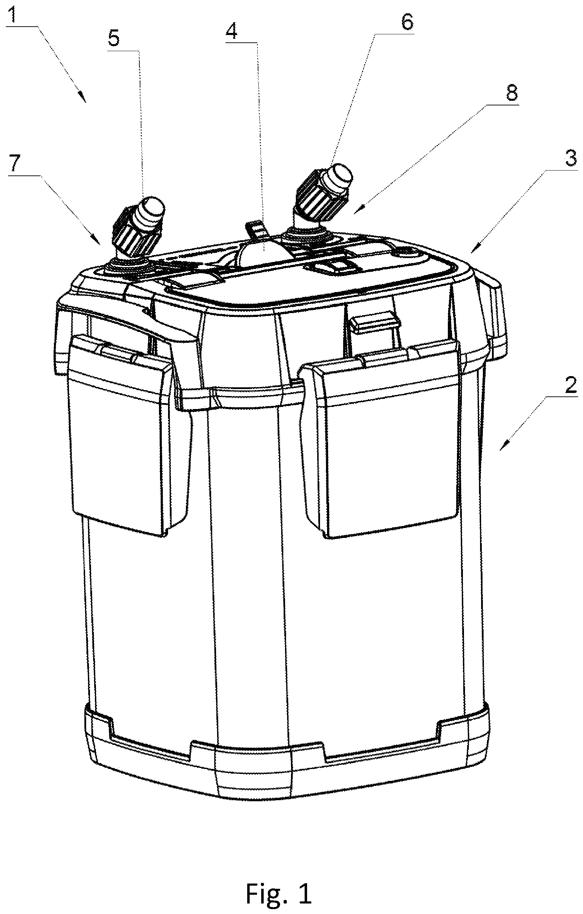

As shown in fig. 1 a water filter 1 for an aquarium encompasses a housing 2 and a cover 3 secured thereto, with, seated thereon, a piston of a priming arrangement 4 and detachable from the cover connection ports 5, 6 of water inlet 7 and water outlet 8 arrangements.

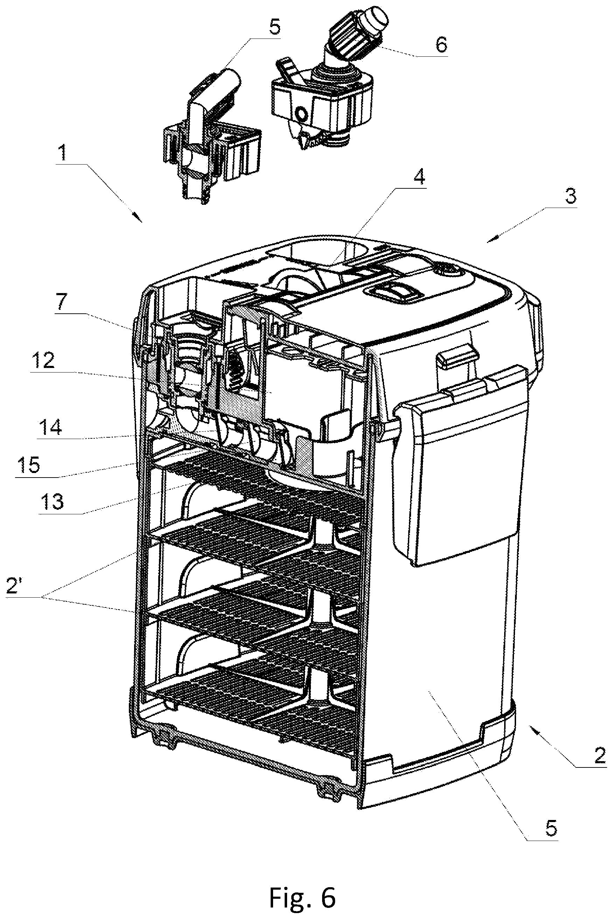

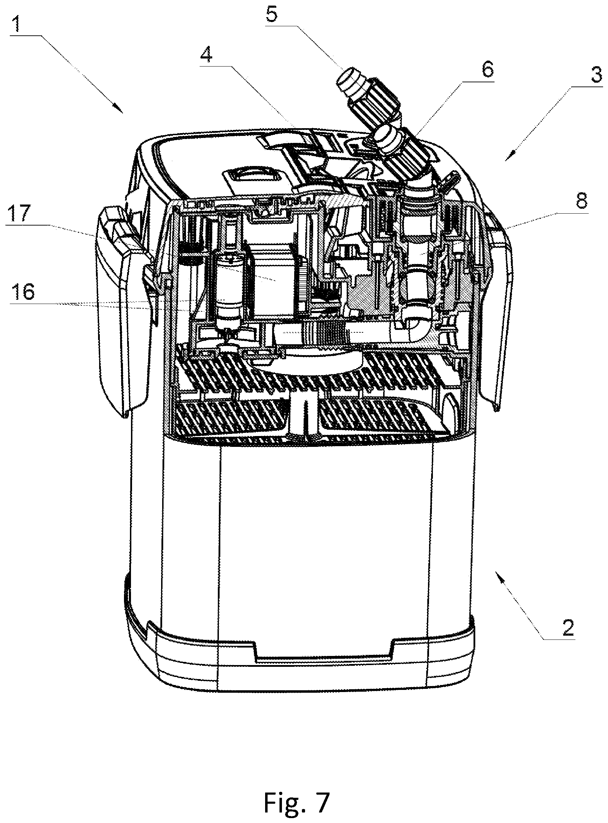

According to an embodiment, a housing 2 is formed as a vertical and open at its top container of a canister type. Inside the housing 2 filtration cartridges are arranged which may be standard filtration media such as for example activated carbon or foam cartridges. Filtration cartridges are positioned in containers 2' that (as shown in figs. 6 or 7) may be arranged within the housing 2 one above another to form a vertical pattern of sequenced levels with filtration cartridges.

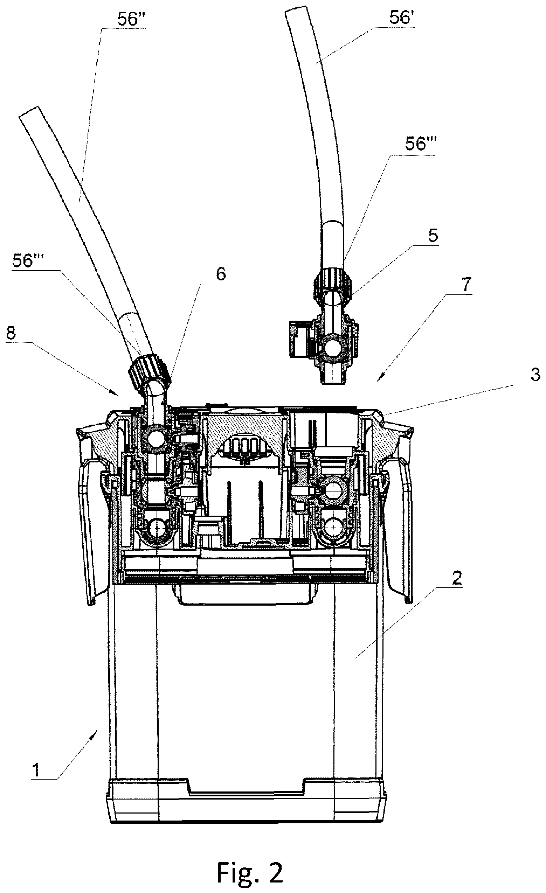

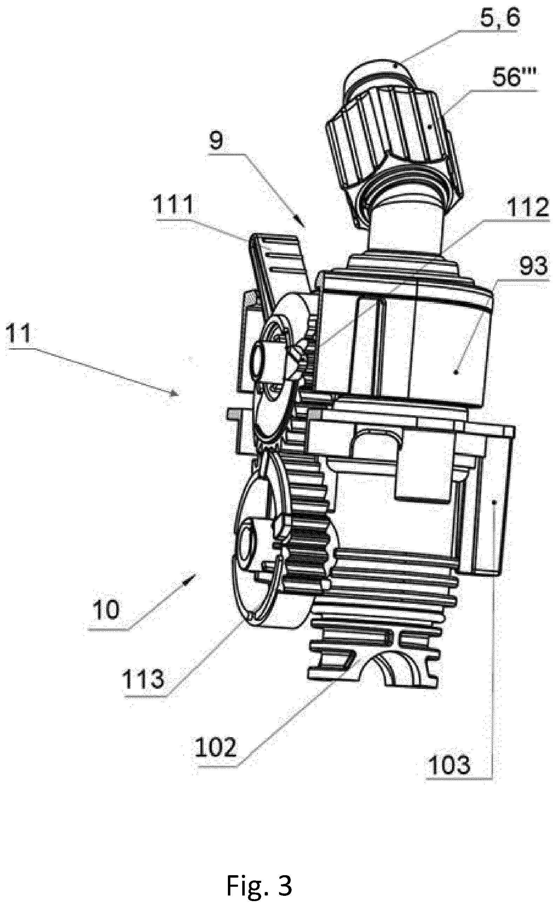

Fig. 2 shows a partial and simplified cross-sectional view of a filter 1 illustrating the structure and reciprocal positioning of the cover 3 of the water inlet 7 and water outlet 8 arrangements. To the cover 3 removable connection ports 5, 6 are mounted - for the water inlet 7 and water outlet 8 arrangements, respectively. The mentioned ports 5, 6 are connected to a water draining conduit 56' and a water feeding conduit 56", from and to the reservoir in a form of an aquarium or a waterhole (not shown), where the filter 1 operates. For better connection of the conduits 56', 56", the connection ports 5, 6 (according to fig. 3) are terminated with pressure nuts 56'".

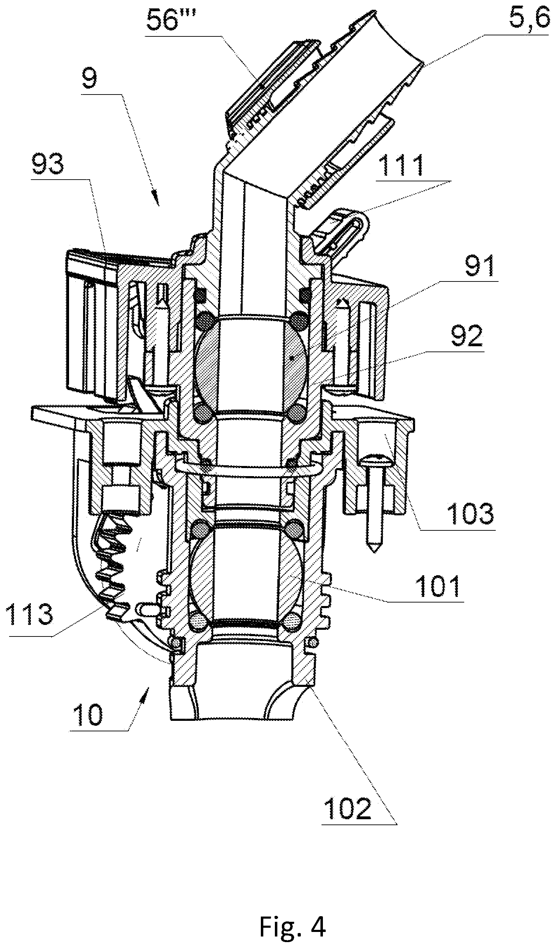

Water inlet 7 and water outlet 8 arrangements have a construction with two ball valves, the structure and operation mode of which are illustrated in detail in figs. 3, 4 and 5. Due to the constructional correspondence of the valve arrangement both in the water inlet 7 arrangement and in the water outlet 8 arrangement - their structure will be presented below in an embodiment of water inlet 7 arrangement, where for analogous constructive elements within the valve assembly - identical reference signs are used.

According to fig. 3 i 4, in the lower segment of the connection port 5, 6 a first valve 9 is defined. The ball 91 of the first valve 9 is arranged within a body 92 which is seated from the inside on a sleeve of the connection port 5, 6 and from the outside it is surrounded by a jacket 93 set on it. The connection port 5, 6 with the first valve 9 is positioned within the cover 3 in a removable manner. Upon positioning of the connection port 5, 6 within the cover 3, the lower and protruding below the jacket 93 portion of the body 92 of the first valve 9 is coupled with the upper section of the conduit of the water inlet 7 arrangement (or the water outlet 8 arrangement), i.e. with the body 102 of the second ball valve 10 which within the cover 3 of the filter 1 is surrounded from the top by a jacket 103 secured in the cover 3.

The reciprocal coupling of the position of balls 91, 101 of the valves, the first valve 9 and the second valve 10, respectively, is effected by means of a gear drive transmission mechanism 11. According to an embodiment of the invention, the drive transmission mechanism comprises a rotatable lever 111 with a rack 112 that cooperates with the toothed wheel 113. The lever 111 with the rack 112 is seated in a bearing in the body 92 of the first valve 9, while the toothed wheel 113 is seated in a bearing correspondingly in the body 102 of the second valve 10. Upon positioning of the connection port 5, 6 in the cover 3 of the filter 1, coupling occurs of the rack 112 of the lever 111 with the toothed wheel 113. Rotation of the lever 111, effected within a longitudinal opening 94 positioned for this purpose in the jacket 93 of the first valve 9, allows for concurrent change in the position of the balls 91, 101 of the first valve 9 and the second valve 10, and thereby for a concurrent change in their operational modes, i.e. from an open one into a closed one and vice versa.

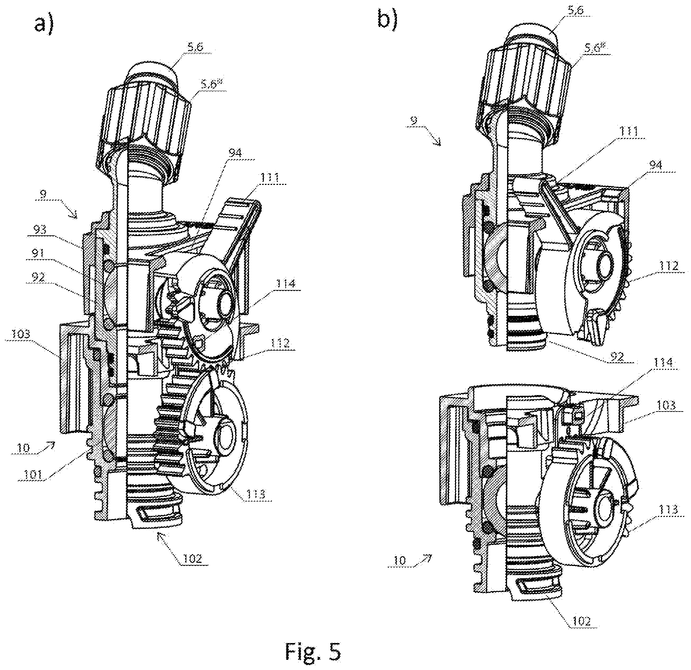

As shown in fig. 5, the body 102 of the second valve 10 has a locking plug 114 formed above the toothed wheel 113. In the position of the connection port 5, 6 arranged within the cover 3 the locking plug 114 is positioned above the envelope of the rack 112. Rotation of the lever 111 from a closed position to the open position of the valves 9, 10 causes locking of the rack 112 under the locking plug 114, and as a result it is not possible to remove the connection ports 5, 6 during operation of the filter, i.e. in an open position of both the first valve 9 and the second valve 10. Only rotation of the lever 111 back to the closed position of the valves 9, 10 allows to obtain the initial position of the rack 112 relative to the toothed wheel 113, and thereby to release the envelope of the rack 112 from beneath the locking plug 114 positioned above.

Due to the concurrent change in the position of the first 9 and second 10 valves, when detaching the connection ports 5, 6, both the first valve 9 and the second valve 10 will be always set in a closed position. Due to the fact that water circulation in the filter is cut-off by the closed second valve 10, during detachment of the connection ports 5, 6 water will not be splashed.

The above discussed water inlet 7 and water outlet 8 arrangements show the same construction with regard to the valve assembly. Hereinbelow water inlet 7 and water outlet 8 arrangements are described from the point of view of the functions performed by them and cooperation with other modules of the filter 1 of the invention.

According to the embodiment shown, in the cover 3 of the filter 1 there is arranged, separately from the position of the water inlet 7 and water outlet 8 arrangements, an additional filtration chamber 12 which is intended to carry out mechanical rough filtration inside. As shown in fig. 6, the water inlet 7 arrangement is connected to the roughing filter chamber 12 by means of an outlet opening 13 formed in the rear wall of the roughing filter chamber 12. Additionally, the water inlet 7 arrangement cooperates with a priming arrangement 4 (not shown). Upstream the roughing filter chamber 12 the water inlet 7 arrangement is equipped with two check valves to prevent water backflow during priming the filter 1. The check valves are constituted by a first closing flap 14 and a second closing flap 15. When introduced into the roughing filter chamber 12, water is guided next - by means of an outlet opening (not shown) formed for this purpose in the chamber- to filtration cartridges, arranged in containers 2', positioned in the housing 2 of the filter 1.

As shown in fig. 7, water finally filtered inside the housing 2 is drawn by a pump 16, driven by a motor 17 and directed to a water outlet 8 arrangement terminated in a connection port 6, and then it is guided through a draining conduit 56" to a reservoir (not shown).

It should be clear that the subject invention is not limited to the above presented embodiment and that diverse modifications and developments thereof are possible within the scope of the enclosed patent claims.

## Claims

1. Water filter for an aquarium, comprising:
- a housing (2) in a form of an open at its top container with filtration cartridges arranged therein, and
- a cover (3) secured to the housing (2),
- water inlet 7 and water outlet 8 arrangements comprising connection ports 5, 6 that are removable from said cover 3, a priming arrangement (4) and said removable connection ports (5, 6) being mounted to said cover (3),
wherein water inlet (7) and water outlet (8) arrangements are provided with valves, wherein the water inlet (7) arrangement comprises a first valve (9) and a second valve (10), and the water outlet (8) arrangement comprises a first valve (9) and a second valve (10), wherein each first valve (9) comprises a body (92) and is connected to the connection port (5, 6) and each second valve (10) comprises a body (102) and is fixed within the cover (3), upon positioning of the connection port (5, 6) within the cover 3, the body (92) of the first valve (9) is coupled with the body (102) of the second valve (10), and each second valve is fixed between the first valve (9) at the connection port (5, 6) and the cover (3), and the first valves (9) and the second valves (10) are coupled through a gear drive transmission mechanism (11), which further enables changing the position of the first valves (9) and second valves (10).

2. Filter according to claim 1, **characterized in that** the first valves (9) and the second valves (10) are rotary valves.

3. Filter according to claim 2, **characterized in that** the first valves (9) and the second valves (10) are ball valves.

4. Filter according to claim 3, **characterized in that** the drive transmission mechanism (11) comprises a rotary lever (111) with a rack (112) and a cooperating toothed wheel (113), where the lever (111) with the rack (112) is seated in a bearing in the body (92) of the first valve (9) and the toothed wheel (113) is seated in a bearing in the body (102) of the second valve (10).

5. Filter according to claim 4, **characterized in that** the body (92) of the first valve (9) is surrounded by a jacket (93) in which an opening (94) for rotation of the lever (111) is formed.

6. Filter according to claim 5, **characterized in that** the body (102) of the second valve (10) has, formed above the toothed wheel (113), a locking plug (114) which in the position of the connection port (5, 6) arranged within the cover (3) is positioned above the envelope of the rack (112).

7. Filter according to claim 1, **characterized in that** it has a roughing filter chamber (12) which is formed in the cover (3) separately relative to the position in the cover (3) of the water inlet (7) arrangement and water outlet (8) arrangement.

8. Filter according to claim 7, **characterized in that** the water inlet (7) arrangement has at least one check valve which is positioned downstream the valves of the water inlet (7) arrangement and upstream the roughing filter chamber (12).

9. Filter according to claim 8, **characterized in that** it comprises two check valves that are constituted by a first closing flap (14) and a second closing flap (15).
11.

## Patentansprüche

1. Wasserfilter für ein Aquarium, umfassend:
- ein Gehäuse (2) in Form eines oben offenen Behälters mit darin angeordneten Filtrationspatronen und
- einen am Gehäuse (2) befestigten Deckel (3),
- eine Wassereinlass- 7 und Wasserauslass-Anordnung 8, die Anschlussstutzen 5, 6 umfassen, die vom Deckel 3 abnehmbar sind, wobei eine Priming-Anordnung (4) und die genannten abnehmbaren Anschlussstutzen (5, 6) am Deckel (3) montiert werden,
wobei die Wassereinlass- (7) und Wasserauslass-Anordnung (8) mit Ventilen versehen sind, wobei die Wassereinlass-Anordnung (7) ein erstes Ventil (9) und ein zweites Ventil (10) umfasst und die Wasserauslass-Anordnung (8) ein erstes Ventil (9) und ein zweites Ventil (10) umfasst, wobei jedes erste Ventil (9) einen Körper (92) umfasst und mit dem Anschlussstutzen (5, 6) verbunden ist und jedes zweite Ventil (10) einen Körper (102) umfasst und innerhalb des Deckels (3) fixiert ist, wobei nach Positionierung des Anschlussstutzens (5, 6) innerhalb des Deckels (3) der Körper (92) des ersten Ventils (9) mit dem Körper (102) des zweiten Ventils (10) gekoppelt ist und jedes zweite Ventil zwischen dem ersten Ventil (9) am Anschlussstutzen (5, 6) und dem Deckel (3) fixiert ist und die ersten Ventile (9) und die zweiten Ventile (10) durch einen Antriebsübertragungsmechanismus (11) gekoppelt sind, was ferner ermöglicht, die Position der ersten Ventile (9) und der zweiten Ventile (10) zu ändern.

2. Filter nach Anspruch 1, **dadurch gekennzeichnet, dass** die ersten Ventile (9) und die zweiten Ventile (10) Drehventile sind.

3. Filter nach Anspruch 2, **dadurch gekennzeichnet, dass** die ersten Ventile (9) und die zweiten Ventile (10) Kugelventile sind.

4. Filter nach Anspruch 3, **dadurch gekennzeichnet, dass** der Antriebsübertragungsmechanismus (11) einen Drehhebel (111) mit einer Zahnstange (112) und einem damit zusammenwirkenden Zahnrad (113) umfasst, wobei der Hebel (111) mit der Zahnstange (112) in einem Lager im Körper (92) des ersten Ventils (9) aufgesetzt ist und das Zahnrad (113) in einem Lager im Körper (102) des zweiten Ventils (10) aufgesetzt ist.

5. Filter nach Anspruch 4, **dadurch gekennzeichnet, dass** der Körper (92) des ersten Ventils (9) von einem Mantel (93) umgeben ist, in dem eine Öffnung (94) zum Drehen des Hebels (111) ausgebildet ist.

6. Filter nach Anspruch 5, **dadurch gekennzeichnet, dass** der Körper (102) des zweiten Ventils (10) einen über dem Zahnrad (113) ausgebildeten Sperrzapfen (114) aufweist, der in der Position des innerhalb des Deckels (3) angeordneten Anschlussstutzens (5, 6) über der Umhüllung der Zahnstange (112) positioniert ist.

7. Filter nach Anspruch 1, **dadurch gekennzeichnet, dass** er eine Vorfilterkammer (12) aufweist, die im Deckel (3) getrennt in Bezug auf die Position der Wassereinlass-Anordnung (7) und der Wasserauslass-Anordnung (8) im Deckel (3) ausgebildet ist.

8. Filter nach Anspruch 7, **dadurch gekennzeichnet, dass** die Wassereinlass-Anordnung (7) mindestens ein Rückschlagventil aufweist, das stromabwärts der Ventile der Wassereinlass-Anordnung (7) und stromaufwärts der Vorfilterkammer (12) positioniert ist.

9. Filter nach Anspruch 8, **dadurch gekennzeichnet, dass** er zwei Rückschlagventile umfasst, die durch eine erste Verschlussklappe (14) und eine zweite Verschlussklappe (15) gebildet sind.

## Revendications

1. Filtre à eau pour aquarium, comprenant:
- un boîtier (2) en forme d'ouverture à son récipient supérieur avec des cartouches de filtration disposées à l'intérieur, et
- un couvercle (3) fixé au boîtier (2),
- des agencements d'entrée d'eau (7) et de sortie d'eau (8) comprenant des orifices de connexion (5, 6) qui sont amovibles dudit couvercle (3), un agencement d'amorçage (4) et lesdits orifices de connexion amovibles (5, 6) étant montés sur ledit couvercle (3),
Dans lequel les agencements d'entrée d'eau (7) et de sortie d'eau (8) sont munis de vannes, dans lequel l'agencement d'entrée d'eau (7) comprend une première vanne (9) et une seconde vanne (10), et l'agencement de sortie d'eau (8) comprend une première vanne (9) et une seconde vanne (10), dans lequel chaque première vanne (9) comprend un corps (92) et est connectée à l'orifice de connexion (5, 6) et chaque seconde vanne (10) comprend un corps (102) et est fixée à l'intérieur du couvercle (3), lors du positionnement de l'orifice de connexion (5, 6) à l'intérieur du couvercle (3), le corps (92) de la première vanne (9) est couplé au corps (102) de la seconde vanne (10), et chaque seconde vanne est fixée entre la première vanne (9) au niveau de l'orifice de connexion (5, 6) et du couvercle (3), et les premières vannes (9) et les secondes vannes (10) sont couplées par l'intermédiaire d'un mécanisme de transmission d'entraînement par engrenage (11), ce qui permet en outre de changer la position des premières vannes (9) et des secondes vannes (10).

2. Filtre selon la revendication 1, **caractérisé en ce que** les premières vannes (9) et les secondes vannes (10) sont des vannes rotatives.

3. Filtre selon la revendication 2, **caractérisé en ce que** les premières vannes (9) et les secondes vannes (10) sont des vannes à bille.

4. Filtre selon la revendication 3, **caractérisé en ce que** le mécanisme de transmission d'entraînement (11) comprend un levier rotatif (111) avec une crémaillère (112) et une roue dentée coopérante (113), le levier (111) avec la crémaillère (112) étant logé dans un palier dans le corps (92) de la première vanne (9) et la roue dentée (113) étant logée dans un palier dans le corps (102) de la seconde vanne (10).

5. Filtre selon la revendication 4, **caractérisé en ce que** le corps (92) de la première vanne (9) est entouré par une chemise (93) dans laquelle est formée une ouverture (94) pour la rotation du levier (111).

6. Filtre selon la revendication 5, **caractérisé en ce que** le corps (102) de la seconde vanne (10) comporte, formé au-dessus de la roue dentée (113), un bouchon de verrouillage (114) qui, dans la position de l'orifice de connexion (5, 6) disposé à l'intérieur du couvercle (3), est positionné au-dessus de l'enveloppe de la crémaillère (112).

7. Filtre selon la revendication 1, **caractérisé en ce qu'**il comporte une chambre de filtre grossier (12) qui est formée dans le couvercle (3) séparément par rapport à la position dans le couvercle (3) de l'agencement d'entrée d'eau (7) et de l'agencement de sortie d'eau (8).

8. Filtre selon la revendication 7, **caractérisé en ce que** l'agencement d'entrée d'eau (7) a au moins un clapet anti-retour qui est positionné en aval des vannes de l'agencement d'entrée d'eau (7) et en amont de la chambre de filtre grossier (12).

9. Filtre selon la revendication 8, **caractérisé en ce qu'**il comprend deux clapets anti-retour qui sont constitués par un premier volet de fermeture (14) et un second volet de fermeture (15).
